# EUROPÄISCHE PATENTSCHRIFT

(11) **EP 3 455 493 B1**
(45) Veröffentlichungstag und Bekanntmachung des Hinweises auf die Patenterteilung: **10.03.2021**
(21) Anmeldenummer: 17722442.5
(22) Anmeldetag: 09.05.2017
(51) Int. Cl.: F03D 1/06, F03D 80/70

(54) **WINDENERGIEANLAGEN-ROTORBLATT, UND WINDENERGIEANLAGE MIT SELBIGEM**
WIND-TURBINE ROTOR BLADE, AND WIND TURBINE HAVING SAME
PALE DE ROTOR D'ÉOLIENNE ET ÉOLIENNE ÉQUIPÉE DE CETTE DERNIÈRE

(30) Priorität: 10.05.2016 DE 102016208051
(43) Veröffentlichungstag der Anmeldung: 20.03.2019
(73) Patentinhaber: Wobben Properties GmbH, 26607 Aurich (DE)
(72) Erfinder: KNOOP, Frank, 26607 Aurich (DE); GUDEWER, Wilko, 26506 Norden (DE); HOFFMANN, Alexander, 26721 Emden (DE); MTAUWEG, Samer, 27568 Bremerhaven (DE)
(74) Vertreter: Eisenführ Speiser
(86) Internationale Anmeldenummer: PCT/EP2017/061071
(87) Internationale Veröffentlichungsnummer: WO 2017/194545

(56) Entgegenhaltungen:
- EP-A2- 2 667 026
- WO-A1-03/060319
- DE-A1-102008 037 605
- DE-A1-102014 203 508
- DE-B- 1 270 411
- US-A1- 2013 330 194

## Beschreibung

Die vorliegende Erfindung betrifft ein Windenergieanlagen-Rotorblatt mit einer Blattwurzel und einer Blattspitze, einem blattwurzelseitig angeordneten Flansch zur Befestigung des Rotorblatts an der Rotornabe, und einem Pitchlager zum Verstellen des Anstellwinkels des Rotorblatts und zur Aufnahme der Blattlasten.

Die Erfindung betrifft ferner eine Windenergieanlage mit einem Generator, vorzugsweise Synchrongenerator, einer Rotornabe, die mit dem Generator zu dessen Antrieb gekoppelt ist, und einem oder mehreren an der Rotornabe befestigten Rotorblättern zum Antrieb der Rotornabe.

Rotorblätter bzw. Rotorblattanordnungen der vorstehend bezeichneten Art sind allgemein bekannt. Unter der Blattlast werden die durch das Eigengewicht der Rotorblätter und durch die einwirkende Windlast verursachten Kräfte verstanden. Bei bekannten Rotorblattanordnungen sind üblicherweise die Pitchlager direkt an der Blattwurzel angeordnet, wobei das Pitchlager mit einem ersten Lagerring entweder direkt oder über einen Flansch mit der Rotornabe verbunden wird, und auf der anderen Seite mit einem zweiten Lagerring mit dem Rotorblatt verbunden wird. Entweder über die Außenseite oder Innenseite des Pitchlagers, oder über ein weiteres Glied, wird das gesamte Rotorblatt direkt am Pitchlager hinsichtlich seines Anstellwinkels zum Wind verstellt.

Moderne Windenergieanlagen werden immer größer. Blattlängen gängiger Rotorblätter übersteigen mittlerweile deutlich die 50 Meter-Marke. Aufgrund der damit einhergehenden hohen Massen und aufgrund der hohen einwirkenden Kräfte auf die Rotorblätter sind auch die Pitchlager entsprechend hohen Lasten ausgesetzt. Dies umfasst sowohl radiale Kräfte, axiale Kräfte als auch Kippmomente. Hierdurch wird eine hohe Lagerreibung erzeugt. Zum Antrieb der Pitchbewegung sind aufgrund der hohen Reibung und der hohen Massen und abzufedernden Belastungen hohe Antriebskräfte notwendig.

Auch wird beobachtet, dass die Anbindung der Rotorblätter an die Rotornabe mit hohen Kosten verbunden ist, da für einen präzisen Sitz des Rotorblatts an der Nabe letztere präzise bearbeitet werden muss, was sich aufgrund der hohen Bauteilkomplexität der Rotornabe bisweilen als schwierig darstellt.

Ein weiteres Problem, das allgemein mit großen Windenergieanlagen einhergeht, ist der notwendige Freigang, also der horizontale Abstand zwischen der Rotationsebene der Rotorblätter und der Turmoberfläche der Windenergieanlagentürme. Da die meisten Türme abschnittsweise leicht konisch ausgebildet sind, ist die maximale Rotorblattlänge begrenzt.

US 2013/330194 A1 offenbart eine Blattwurzelverlängerung für ein Rotorblatt einer Windenergieanlage. Die Blattwurzelverlängerung ist feststehend an der Rotornabe angeordnet, an der freien Ende ein Pitchlager für das gepitchte Rotorblatt vorgesehen ist. Das gepitchte Rotorblatt ist zur feststehenden Rotorblattverlängerung unter einem Winkel hingeneigt ausgerichtet, sodass die Blattspitze des Rotorblattes weiter vom Turm absteht als das blattwurzelseitige Ende des Rotorblatts.

Aufgrund der vorstehenden Erkenntnisse besteht Bedarf für Verbesserungen der bekannten Rotorblätter.

Der Erfindung lag demzufolge die Aufgabe zugrunde, die im Stand der Technik aufgefundenen, vorstehend benannten Nachteile möglichst weitgehend zu beheben. Insbesondere lag der Erfindung die Aufgabe zugrunde, die Rotorblattanordnung hinsichtlich der Pitchlagerbelastung zu verbessern, und ferner insbesondere eine Kostensenkung für die Rotorblattanordnungen und für die Windenergieanlagen mit solchen Rotorblattanordnungen insgesamt zu ermöglichen.

Die Erfindung löst die ihr zugrunde liegende Aufgabe bei einem Windenergieanlagen-Rotorblatt der eingangs bezeichneten Art, indem das Rotorblatt einen Träger aufweist, an welchem der Flansch ausgebildet ist, wobei das Pitchlager an dem Träger befestigt und von dem Flansch in Richtung der Blattspitze beabstandet ist. Die Erfindung beruht auf der Erkenntnis, dass die auf das Pitchlager infolge der Windkraft wirkenden Kippmomente eine Hauptursache für auftretenden Lagerverschleiß sowie Lagerreibung und somit für die Notwendigkeit groß dimensionierter Pitchlager und Pitchantriebe sind. Diesem Ansatz folgend zielt die Erfindung darauf ab, das auf das Pitchlager wirkende resultierende Kippmoment zu reduzieren. Die Erfindung erreicht dieses Ziel, indem das Pitchlager in Richtung der Blattspitze von dem Flansch beabstandet ist. Hierdurch wirken im Wesentlichen zwei Flächenmomente auf das Pitchlager; zum einen ein Flächenmoment, welches auf die Flächenkraft zurückzuführen ist, die sich vom Pitchlager aus in Richtung der Blattspitze erstreckt. Zum anderen wirkt auf das Pitchlager ein Gegenmoment in die andere Richtung, welches auf die Flächenkraft zwischen dem Pitchlager und der Blattwurzel zurückzuführen ist. Die beiden Momente kompensieren sich teilweise, so dass das resultierende Kippmoment, welches auf das Pitchlager einwirkt, im Vergleich zu konventionellen Lösungen, bei denen das Pitchlager am inneren Ende, blattwurzelseitig am Rotorblatt angeordnet ist, deutlich reduziert wird. Dies bringt eine Reihe von Vorteilen mit sich. Es können aufgrund der geringeren resultierenden Kippmomente kleiner dimensionierte Pitchlager verwendet werden, was das Gewicht der vom Windenergieanlagenturm getragenen Gondel samt Rotorblättern reduziert. Aufgrund der kleineren Pitchlagergrößen müssen geringerer Lagerdrehwiderstand (Lagerreibung) und geringere Massen zum Verstellen des Anstellwinkels bewegt werden, wodurch auch kleiner dimensionierte Pitchantriebe verwendet werden können. Dies führt insgesamt zu einer Kostensenkung in der Fertigung und Anschaffung erfindungsgemäßer Windenergieanlagen-Rotorblätter und Windenergieanlagen.

Erfindungsgemäß weist der Träger zwischen dem Pitchlager und dem Flansch eine zu der Pitchachse derart abgewinkelte Trägerachse auf, dass die Pitchachse in einer Windenergieanlage montiertem Zustand des Rotorblatts weiter von einer Turmachse der Windenergieanlage beabstandet ist als der Flansch. Man kann davon sprechen, dass das Rotorblatt in einer solchen Ausführungsform in der Pitchebene einen Knick aufweist. Die Außenstruktur ragt infolge des Knicks weiter nach vorne von der Gondel vor, als es ein konventionelles Rotorblatt mit einem Konuswinkel an der Blattlagerebene tun würde. Hierdurch wird der Freigang zwischen den Rotorblättern und dem Turm der Windenergieanlage erhöht, was die Verwendung längerer Rotorblätter als bislang bekannt ermöglicht. Der Winkel zwischen der Pitchachse und der Trägerachse liegt vorzugsweise in einem Bereich von 1° bis 15°, weiter vorzugsweise in einem Bereich von 2° bis 10° und besonders bevorzugt in einem Bereich von 3° bis 5°.

Unter dem Träger wird erfindungsgemäß ein Strukturbauteil verstanden, welches beispielsweise zapfenförmig oder schaftförmig ausgebildet ist und vorzugsweise einen wenigstens abschnittsweise polygonalen oder zylindrischen Querschnitt aufweist. Vorzugsweise ist der Träger wenigstens abschnittsweise kegelstumpfförmig ausgebildet.

Wenn im Rahmen der Erfindung von einem Abstand zwischen Flansch und Pitchlager gesprochen wird, so ist hierunter ein Abstand im Bereich von 0,5 m oder mehr zu verstehen. In bevorzugten Ausführungen beträgt der Abstand 5m oder mehr, besonders bevorzugt 10m oder mehr. Die Erfindung wird dadurch vorteilhaft weitergebildet, dass das Rotorblatt ferner eine Außenstruktur aufweist, an welcher die vom Wind umströmte aerodynamische Blattoberfläche ausgebildet ist, wobei die Außenstruktur mittels des Pitchlagers um eine Pitchachse drehbar an dem Träger gelagert ist. Dies ermöglicht es, den nicht bewegten, statisch an der Rotornabe befestigten Träger vollständig auf Stabilität hin auszulegen, da die aerodynamische Funktion vornehmlich von der Außenstruktur getragen wird. In Abhängigkeit der verwendeten Lagerung werden die Lasten in den Träger eingeleitet und in die Nabe weitergeleitet. Somit werden die Lasten auch von dem Träger getragen.

Alternativ oder zusätzlich kann aber auch der Träger an seiner Außenfläche aerodynamisch ausgebildet sein, sofern er im Betrieb vom Wind umströmt wird.

In einer bevorzugten Ausführungsform der Erfindung weist das Pitchlager ein einziges Lager auf, welches Axial-, Radial- und Biegebelastungen zwischen Außenstruktur und Träger aufnimmt. Ein solches Lager ist vorzugsweise als Momentenlager, oder als, insbesondere mehrreihiges, Vierpunktlager ausgebildet.

In einer alternativen bevorzugten Ausgestaltung weist das Pitchlager ein erstes Lager auf, welches zumindest Axialbelastungen, vorzugsweise zumindest Axialbelastungen und Radialbelastungen, besonders bevorzugt Axial-, Radialbelastungen und Kippmomente aufnimmt, und zusätzlich ein zweites Lager als Stützlager aufweist, welches Radiallasten aufnimmt. In Abhängigkeit des Lagerungskonzepts ist das zweite Lager, insbesondere bei einer Fest-Los-Lager-Lösung sowie bei einer Stützlagerung (O-Anordnung oder X-Anordnung) dazu eingerichtet, sowohl radiale als auch axiale Lasten aufzunehmen.

In einer weiteren bevorzugten Ausführungsform ist das zweite Lager als Gleitfläche zur Aufnahme der radialen Lasten ausgebildet. Die Gleitfläche wird vorzugsweise an dem Träger und/oder an dem Blatt ausgebildet, beispielsweise durch die jeweilige Anbringung eines Streifens aus einer Kupferlegierung oder einem Weißmetall. Die mittlere Rauheit Rₐ der Gleitfläche liegt vorzugsweise in einem Bereich von (Rₐ ≤ 1,0 µm, bestimmt beispielsweise nach ISO 25178:2009. In einer solchen Ausführungsform ist das erste Lager vorzugsweise ein Momentenlager oder Vierpunktlager, oder alternativ eine konventionelle Festlagerung oder Kombination aus Fest- und Loslagerung, während das zweite Lager als Stützlager beispielsweise ein Radiallager sein kann.

Wenn vorstehend von Ausführungsformen mit erstem und zweitem Lager gesprochen wird, ist das erste Lager dasjenige, welches von dem Flansch wie vorstehend definiert beabstandet ist. Das zweite Lager ist näher an der Blattwurzel angeordnet als das erste Lager. Vorzugsweise ist das zweite Lager in einem Abstand von weniger als 0,5m zu der Flanschebene angeordnet, besonders bevorzugt unmittelbar in der Flanschebene.

In einer weiteren bevorzugten Ausführungsform weist das Rotorblatt eine Pitchebene auf, die in Richtung der Blattspitze von der Blattwurzel beabstandet ist, und das Rotorblatt entlang der Pitchebene in einen ungepitchten und einen gepitchten Teil unterteilt. Diese Ausführungsform erlaubt es einerseits, den Träger und die Außenstruktur nebeneinander anzuordnen, wobei der Träger, bezogen auf die Umlaufbewegung der Rotorblätter an der Windenergieanlage radial innen, nabenseitig, angeordnet ist, und an ihm radial außerhalb davon die Außenstruktur über das Pitchlager montiert wird.

In einer ersten bevorzugten Ausführungsform ist die Außenstruktur mit einem Innenring des Pitchlagers gekoppelt. In dieser Ausführung kann beispielsweise ein Wellenende an der Außenstruktur befestigt sein, das von dem Pitchlager aufgenommen und innerhalb des Trägers gelagert wird. Das Wellenende wird vorzugsweise direkt oder mittels des Innenrings des Pitchlagers zum Verstellen des Pitchwinkels der Außenstruktur von einem motorischen Pitchantrieb angetrieben. Der Träger ist in dieser Ausgestaltung ein Hohlkörper, in den das Wellenende eingreift, und weist vorzugsweise einen Teil der äußeren Oberfläche des Rotorblattes auf.

In einer zweiten alternativen Ausführung ist die Außenstruktur mit einem Außenring des Pitchlagers gekoppelt. Diese Ausgestaltung ermöglicht es, zwischen der Außenstruktur und dem Träger einen Überlappungsbereich auszubilden, in dem der Träger innerhalb der Außenstruktur angeordnet ist. In einer solchen Ausführungsform definiert das der Blattwurzel zugewandte Ende des Überlappungsbereichs dann die Pitchebene. In dem Überlappungsbereich ist die Außenstruktur quasi wie ein Gehäuse über den Träger gelegt und verdeckt diesen. Der Überlappungsbereich kann sich im Wesentlichen bis zur Blattwurzel hin erstrecken, wobei in einer solchen Ausführungsform das Blatt von außen betrachtet wie ein konventionelles, an der Blattwurzel gepitchtes Lager funktioniert, tatsächlich aber aufgrund der Momenten-Ausbalancierung deutlich geringere Reibung und somit geringere Pitchkräfte erfordert. Diese Ausführungsform hat noch einen weiteren Vorteil: Wenn der Träger ausreichend dimensioniert ist, dass er begehbar wird, kann das Rotorblatt zumindest bis zur Pitchebene von innen in montiertem Zustand begangen werden. Aufgrund der Leichtbauweise ist dies bei konventionellen Rotorblättern, die häufig aus Faserverbundwerkstoffen hergestellt sind, nicht immer möglich. Der Träger allerdings schirmt die mechanische Belastung, die durch ein Begehen verursacht würde, von der leichtgewichtig ausgelegten Außenstruktur ab.

Vorzugsweise ist die Außenstruktur mehrteilig ausgebildet und weist einen ersten Teil auf, der sich von dem Pitchlager, insbesondere dem ersten Lager des Pitchlagers, bis zur Blattspitze erstreckt, sowie einen zweiten Teil, der sich von dem Pitchlager, insbesondere dem ersten Lager des Pitchlagers, bis zu der Pitchebene erstreckt. Besonders bevorzugt sind der erste Teil und der zweite Teil der Außenstruktur mittels eines drehenden Rings, insbesondere des Außenrings, des (ersten) Pitchlagers miteinander verbunden, beispielweise indem sie an gegenüberliegenden Stirnseiten des Außenrings des Pitchlagers an dem Pitchlager befestigt sind. Besonders bevorzugt erstreckt sich der zweite Teil der Außenstruktur bis in die Nähe der Flanschebene.

In einer weiteren bevorzugten Ausführungsform weist das Rotorblatt eine nicht gepitchte Blattverkleidung auf, die sich zwischen der Blattwurzel und der Außenstruktur im wesentlichen bis zur Pitchebene erstreckt, insbesondere angrenzend an den Überlappungsbereich.

Eine solche Blattverkleidung kann vorzugsweise ebenfalls aerodynamisch optimiert ausgebildet sein, um für eine bestimmten Anström-Winkelbereich in montiertem Zustand des Rotorblatts einen möglichst verringerten Strömungswiderstand und möglichst wenig Turbulenzbildung zu gewährleisten. Die Blattverkleidung könnte auch strukturell mit dem Träger verbunden sein oder einteilig mit diesem ausgebildet.

Die Erfindung löst ferner die ihr zugrunde liegende Aufgabe bei einer Windenergieanlage der eingangs bezeichneten Art, indem die Rotorblätter nach einer der vorstehend beschriebenen bevorzugten Ausführungsformen ausgebildet sind. Aufgrund der geringeren Belastungen der Pitchlager und der Pitchantriebe ist eine zuverlässige Betriebsweise bei gleichzeitig reduzierten Kosten der Windenergieanlagen zu erwarten. Hinsichtlich der weiteren Vorteile und bevorzugten Ausführungen der erfindungsgemäßen Windenergieanlagen wird auf die vorstehend Ausführungen zu den Rotorblättern verwiesen.

Die Windenergieanlage gemäß der Erfindung wird vorzugsweise weitergebildet, indem jedem Rotorblatt ein Pitchantrieb mit einem Antriebsritzel zugeordnet ist, welches in eine Verzahnung eingreift.

Die Verzahnung ist vorzugsweise an der Außenstruktur oder einem an der Außenstruktur vorgesehenen Wellenende, oder unmittelbar an dem bewegten Lagerring des Lagers beziehungsweise eines der Lager des Pitchlagers angeordnet. Vorzugsweise ist die Verzahnung an den Lagerring angeformt.

Die Verzahnung ist vorzugsweise entlang eines Winkelbereichs zwischen 60° und 270° ausgebildet, vorzugsweise zwischen 90° und 180°.

Weiter vorzugsweise weist die Verzahnung mehrere aneinandergereihte Segmente auf, die gemeinsam den vorstehenden Winkelbereich abdecken.

Die Erfindung wird im Folgenden anhand bevorzugter Ausführungsbeispiele unter Bezugnahme auf die beigefügten Figuren näher beschrieben. Hierbei zeigt:
- Figur 1: eine schematische Windenergieanlage in einem ersten Ausführungsbeispiel,
- Figur 2a: eine Teildarstellung der Windenergieanlage gemäß Figur 1 mit einem Rotorblatt gemäß einem ersten Ausführungsbeispiel,
- Figur 2b: eine Teildarstellung der Windenergieanlage gemäß Figur 1 mit einem Rotorblatt gemäß einem zweiten Ausführungsbeispiel,
- Figur 3: eine erfindungsgemäße Windenergieanlage gemäß einem bevorzugten Ausführungsbeispiel mit einem erfindungsgemäßen Rotorblatt.

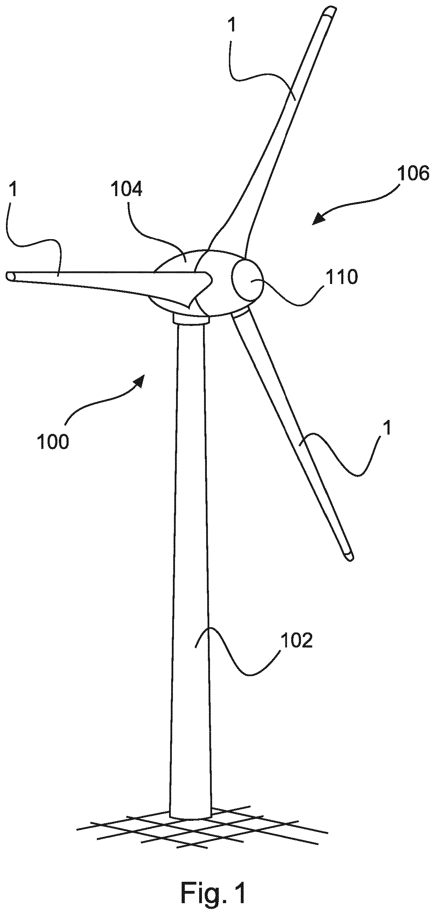

Figur 1 zeigt eine Windenergieanlage 100 mit einem Turm 102 und einer Gondel 104. An der Gondel 104 ist eine Rotornabe 106 mit drei Rotorblättern 1 und einem Spinner 110 angeordnet. Der Rotor 106 wird in Betrieb durch den Wind in eine Drehbewegung versetzt und treibt dadurch einen Generator in der Gondel 104 an.

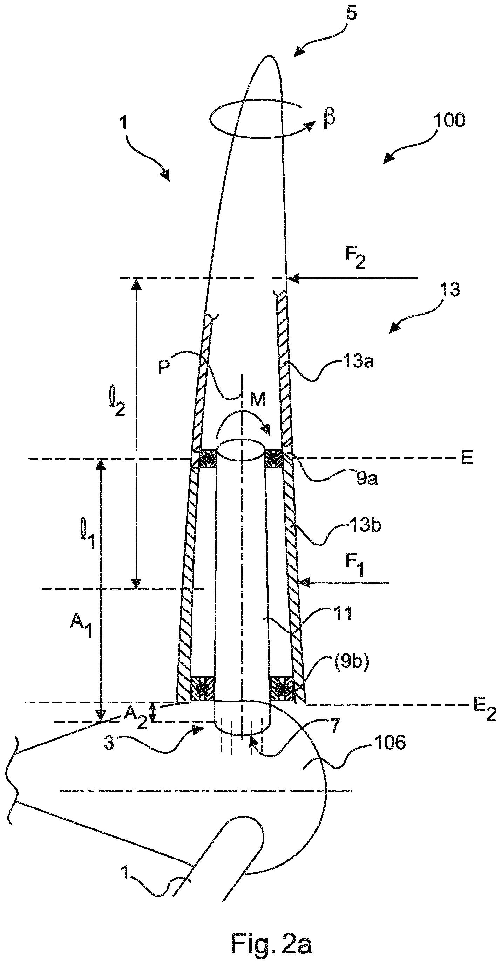

Figur 2a zeigt das Rotorblatt 1 gemäß Figur 1 in einer schematischen Teilschnittansicht. Das Rotorblatt 1 weist eine Blattwurzel 3 und eine Blattspitze 5 auf. Am blattwurzelseitigen Ende weist das Rotorblatt 1 einen Flansch 7 zur Befestigung an der Rotornabe 106 auf.

Das Rotorblatt 1 weist ein Pitchlager 9a auf. Das Pitchlager 9a ist in einem Abstand A₁ zu dem Flansch 7 beabstandet. Das Pitchlager 9a ist vorzugsweise als Momenten- oder (mehrreihiges) Vierpunktlager ausgebildet. Das Pitchlager 9a ist von einem Träger 11 mit einem inneren Lagerring befestigt. Der Träger 11 weist den Flansch 7 auf und ist fest an der Rotornabe 106 verankert. An seinem Außenring ist das Pitchlager 9a mit einer Außenstruktur 13 fest verbunden, so dass die Außenstruktur 13 relativ zu dem Träger 11 mittels des Pitchlagers 9a drehbar gelagert ist. Das Pitchlager 9a definiert eine Pitchachse P, um die das Rotorblatt 1 bzw. dessen Außenstruktur 13 um den Winkel β im Anstellwinkel verstellbar ist.

In einer bevorzugten Alternative weist die Pitchlagerung zusätzlich ein Stützlager 9b auf, welches in einem Abstand A₂ zum Flansch 7 am Träger 11 angeordnet ist, und die Außenstruktur 13 zusätzlich abstützt.

Die Außenstruktur 13 ist vorzugsweise als ein homogenes Teil ausgebildet, bei dem sich im Bereich 13b ein Überlappungsbereich zwischen dem Träger 11 und der Außenstruktur 13 ergibt. In einer bevorzugten Alternative ist die Außenstruktur 13 mehrteilig ausgebildet und weist einen ersten Teil 13a und einen zweiten Teil 13b auf, die entweder miteinander oder jeweils mittels des Lagers 9a miteinander gekoppelt sind.

Im Bereich einer Überlappung zwischen der Außenstruktur 13 und dem Träger 11 wandert die Pitchebene soweit in Richtung des Flansches 7 zur Blattwurzel 3 hin, wie die Überlappung ausgestaltet ist. Im gezeigten Ausführungsbeispiel der Figur 2a wäre die Pitchebene bei einer angenommenen homogenen Außenstruktur 13, in der die Bereiche 13a und 13b rotieren, an der durch E₂ gekennzeichneten Stelle.

Die Funktionsweise der erfindungsgemäßen Pitchlagerung wird nachfolgend unter der Annahme erläutert, dass die Pitchlagerung ausschließlich das Pitchlager 9a aufweist: Auf das Rotorblatt wirkt einerseits im Bereich 13a der Außenstruktur die Kraft F₂ ein, und im Bereich 13b die Kraft F₁. Die Kraft F₁ hat einen Hebelarm I₁ zum Pitchlager 9a, während die Kraft F₂ einen Hebelarm I₂ zum Pitchlager 9a aufweist. Das resultierende Kippmoment M ergibt sich nach der Gleichung M=F₂ x I₂ - F₁ x I₁. Im Vergleich dazu wäre das resultierende Kippmoment deutlich größer, wenn die Pitchlagerung direkt am Flansch 7 angeordnet wäre: Dann ergäbe sich das Moment aus der Summe der Kraft F₁ mal ihrem Abstand zum Flansch und der Summe F₂ mal ihrem Abstand zum Flansch 7. Es ist unmittelbar einleuchtend, dass jenes resultierende Moment um ein Windenergieanlage Vielfaches größer wäre als das erfindungsgemäße resultierende Kippmoment.

Die Stabilität des Rotorblatts 1 wird durch die Verwendung des zusätzlichen Pitchlagers 9b zusätzlich verbessert.

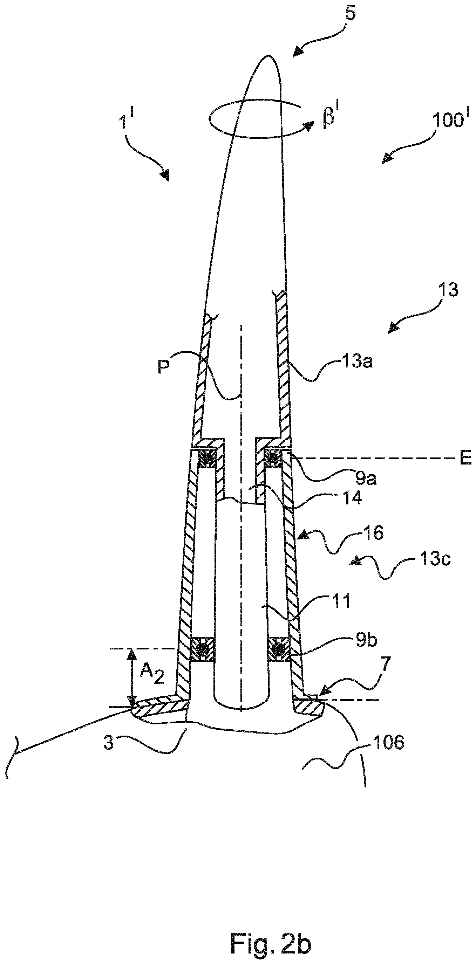

Figur 2b zeigt eine zu Figur 2a alternative Ausgestaltung eines Rotorblattes 1' für eine Windenergieanlage 100'. In jener Ausführungsform, in der nur der Bereich 13a als Außenstruktur fungiert, ist der Träger 11 nicht innenliegend, sondern außenliegend als Hohlkörper ausgebildet und fungiert vorzugsweise außen als Blattverkleidung 16 zwischen der Pitchebene E und der Blattwurzel. Die Außenstruktur 13a weist ein Wellenende 14 auf, welches drehbar in dem Träger 11 gelagert ist. Der Bereich 13a ist der gepitchte Teil des Rotorblattes, während zwischen Pitchebene E und dem Flansch 7 ein nicht gepitchter Teil 13c ausgebildet ist.

Im Ausführungsbeispiel gemäß Figuren 2a,b entspricht die Pitchachse P in etwa einer Längsachse des Rotorblatts, die sich von der Mitte der Blattwurzel 3 bis zur Mitte der Blattspitze 5 hin erstreckt.

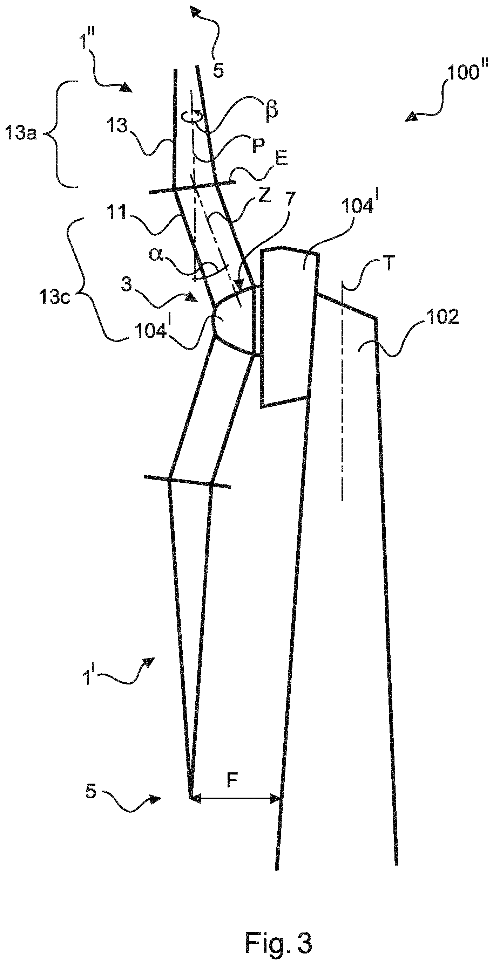

In dem in Figur 3 gezeigten Ausführungsbeispiel verhält sich dies etwas anders. In Figur 3 ist ebenfalls eine erfindungsgemäße Windenergieanlage 100" dargestellt, allerdings mit einem von der Darstellung gemäß Figur 2 abweichenden Rotorblatt 1". Das Rotorblatt 1" weist ebenfalls eine Blattwurzel 3 und eine Blattspitze 5 auf. Ein Flansch 7 ist an einem Träger 11 ausgebildet und mit der Rotornabe 106 verbunden. Die Außenstruktur 13 des Rotorblatts 1" ist ebenfalls um einen Winkel β um die Pitchachse P verstellbar. Das Rotorblatt 1" ist durch die (nicht dargestellte) Pitchlagerung in einer Pitchebene E in einen nicht gepitchten Teil 13a, und einen gepitchten Teil 13c unterteilt, wobei aufgrund der nichtvorhandenen Überlappung der nicht gepitchte Teil durch den Träger 11 charakterisiert wird, und der gepitchte Teil durch die Außenstruktur 13.

Der wesentliche Unterschied zu der Darstellung gemäß Figur 2 ist derjenige, dass der Träger 11, der eine Trägerachse Z aufweist, mit der Trägerachse Z um einen Winkel α relativ zu der Pitchachse P abgewinkelt ist, so dass die Außenstruktur 13 und die Pitchachse P weiter von einer vertikalen Achse T des Turms 102 der Windenergieanlage 100' beabstandet sind als der Flansch 7 am blattwurzelseitigen Ende des Rotorblatts 1". Durch diesen Winkel α werden die Rotorblätter 1" von der vertikalen Achse T des Turms 102 der Windenergieanlage 100' weiter abgerückt, wodurch der Turmfreigang F bei gleichbleibender Rotorblattlänge erhöht, bzw. das Rotorblatt 1" bis zum Erreichen eines minimal vorgeschriebenen Turmfreigangs länger ausgeführt werden kann. Zudem wird durch die erfindungsgemäße Bauform eine sehr kompakte Gondel- bzw. Maschinenhausgröße erreicht, angedeutet durch Bezugszeichen 104'.

Aus den vorstehenden Erörterungen ergibt sich, dass unter Befolgung der erfindungsgemäßen Aspekte eine in ihrer Funktion Belastungssituation verbesserte Windenergieanlage erreicht werden kann.

## Patentansprüche

1. Windenergieanlagen-Rotorblatt (1, 1', 1"), mit
einer Blattwurzel und einer Blattspitze (5),
einem blattwurzelseitig angeordneten Flansch (7) zur Befestigung des Rotorblatts an einer Rotornabe einer Windenergieanlage, und
einem Pitchlager (9b, 9a), zum Verstellen des Anstellwinkels (β) des Rotorblatts, wobei das Rotorblatt einen ungepitchten Träger (11) aufweist, an welchem der Flansch (7) ausgebildet ist, wobei das Pitchlager (9b, 9a) an dem Träger (11) befestigt und von dem Flansch (7) in Richtung der Blattspitze (5) beabstandet ist,
**dadurch gekennzeichnet, dass** der Träger (11) zwischen dem Pitchlager (9a, b) und dem Flansch (11) einen zu der Pitchachse (P) derart abgewinkelten Abschnitt aufweist, dass die Pitchachse (P) in an der Windenergieanlage montiertem Zustand des Rotorblatts weiter von einer Turmachse (T) der Windenergieanlage (100') beabstandet ist als der Flansch (7).

2. Rotorblatt (1, 1', 1") nach Anspruch 1,
wobei das Rotorblatt ferner eine Außenstruktur (13) aufweist, an welcher die vom Wind umströmte aerodynamische Blattoberfläche ausgebildet ist, und die Außenstruktur mittels des Pitchlagers (9a, 9b) um eine Pitchachse (P) drehbar an dem Träger (11) gelagert ist.

3. Rotorblatt (1, 1', 1") nach Anspruch 2,
wobei das Pitchlager ein einziges Lager (9a) aufweist, welches Axialbelastungen, Radialbelastungen und Kippmomente zwischen Außenstruktur (13) und Träger (11) aufnimmt.

4. Rotorblatt (1, 1', 1") nach Anspruch 1 oder 2,
wobei das Pitchlager ein erstes Lager (9a) aufweist, welches zumindest Axialbelastungen, vorzugsweise Axialbelastungen und Radialbelastungen, besonders bevorzugt Axialbelastungen, Radialbelastungen und Kippmomente, aufnimmt und zusätzlich ein zweites Lager (9b) als Stützlager aufweist, welches zumindest Radiallasten aufnimmt.

5. Rotorblatt (1, 1', 1") nach Anspruch 4,
wobei das erste Lager (9a) weiter von dem Flansch beabstandet ist als das zweite Lager (9b).

6. Rotorblatt (1, 1', 1") nach einem der Ansprüche 1 bis 5,
wobei das Rotorblatt eine Pitchebene (E, E₂) aufweist, die in Richtung der Blattspitze (5) von der Blattwurzel (3) beabstandet ist, und das Rotorblatt entlang der Pitchebene in einen ungepitchten Teil (13c) und einen gepitchten Teil (13a) unterteilt.

7. Rotorblatt (1, 1') nach einem der vorstehenden Ansprüche,
wobei zwischen der Außenstruktur (13a) und dem Träger (11) ein Überlappungsbereich (13b) ausgebildet ist.

8. Rotorblatt nach Anspruch 7,
wobei an der Außenstruktur (13a) ein Wellenende (14) angeordnet ist, welches drehbar mittels des Pitchlagers (9a) in dem Träger (11) gelagert ist.

9. Rotorblatt nach Anspruch 7,
wobei der Träger (11) innerhalb der Außenstruktur (13a) angeordnet ist.

10. Rotorblatt (1') nach einem der vorstehenden Ansprüche, insbesondere nach Anspruch 9,
mit einer Blattverkleidung (16), die sich zwischen der Blattwurzel (3) und der Außenstruktur (13a) im wesentlichen bis zur Pitchebene (E) erstreckt.

11. Windenergieanlage (100, 100', 100"), mit
einem Generator, vorzugsweise einem Synchrongenerator, einer Rotornabe (10b), die mit dem Generator zu dessen Antrieb gekoppelt ist, und einem oder mehreren an der Rotornabe (10b) befestigten Rotorblättern (1, 1') zum Antrieb der Rotornabe (10b),
**dadurch gekennzeichnet, dass** die Rotorblätter (1, 1') nach einem der vorstehenden Ansprüche ausgebildet sind.

12. Windenergieanlage (100, 100', 100") nach Anspruch 11,
wobei jedem Rotorblatt (1, 1', 1") ein Pitchantrieb mit einem Antriebsritzel zugeordnet ist, welches in eine Verzahnung eingreift.

13. Windenergieanlage (100, 100', 100") nach Anspruch 12,
wobei die Verzahnung an der Außenstruktur oder einem an der Außenstruktur vorgesehenen Wellenende, oder unmittelbar an dem Pitchlager angeordnet, vorzugsweise an einen Lagerring des Pitchlagers angeformt ist.

14. Windenergieanlage (100, 100', 100") nach Anspruch 12 oder 13,
wobei die Verzahnung entlang eines Winkelbereichs zwischen 60° und 270° ausgebildet ist, vorzugsweise zwischen 90° und 180°.

15. Windenergieanlage (100, 100', 100") nach einem der Ansprüche 12 bis 14, wobei die Verzahnung mehrere aneinandergereihte Segmente aufweist.

## Claims

1. A wind-turbine rotor blade (1, 1', 1"), comprising
a blade root and a blade tip (5),
a flange (7) arranged on the blade root side for fastening the rotor blade to a rotor hub of a wind turbine, and
a pitch bearing (9b, 9a) for adjusting the angle of attack (β) of the rotor blade,
wherein the rotor blade has a non-pitched carrier (11) on which the flange (7) is formed, wherein the pitch bearing (9b, 9a) is fastened to the carrier (11) and is spaced apart from the flange (7) toward the blade tip (5),
**characterized in that** the carrier (11) comprises a section between the pitch bearing (9a, b) and the flange (11) which is angled with respect to the pitch axis (P) in such a way that, when mounted to the wind turbine, the pitch axis (P) is spaced apart farther from a tower axis (T) of the wind turbine (100') than the flange (7) is.

2. The rotor blade (1, 1', 1") according to claim 1,
wherein the rotor blade further has an outer structure (13) on which the aerodynamic blade surface around which the wind flows is formed, and the outer structure is rotatably supported on the carrier (11) about a pitch axis (P) by means of the pitch bearing (9a, 9b).

3. The rotor blade (1, 1', 1") according to claim 2,
wherein the pitch bearing has a sole bearing (9a) which absorbs axial loads, radial loads and tilt moments between outer structure (13) and carrier (11).

4. The rotor blade (1, 1', 1") according to claim 1 or 2,
wherein the pitch bearing has a first bearing (9a), which absorbs at least axial loads, preferably radial axial loads and radial loads, particularly preferably axial loads, radial loads and tilt moments, and which additionally has a second bearing (9b) as support bearing, which absorbs at least radial loads.

5. The rotor blade (1, 1', 1") according to claim 4,
wherein the first bearing (9a) is spaced apart farther from the flange than the second bearing (9b).

6. The rotor blade (1, 1', 1") according to one of claims 1 to 5,
wherein the rotor blade comprises a pitch plane (E, E₂) which is spaced apart from the blade root (3) toward the blade tip (5), and divides the rotor blade along the pitch plane into a non-pitched part (13c) and a pitched part (13a).

7. The rotor blade (1, 1') according to one of the preceding claims,
wherein an overlap area (13b) is formed between the outer structure (13a) and the carrier (11).

8. The rotor blade according to claim 7,
wherein a shaft end (14) is arranged on the outer structure (13a), which is rotatably supported in the carrier (11) by means of the pitch bearing (9a).

9. The rotor blade according to claim 7,
wherein the carrier (11) is arranged inside the outer structure (13a).

10. The rotor blade (1') according to one of the preceding claims, in particular according to claim 9,
comprising a blade covering (16) which extends between the blade root (13) and the outer structure (13a) substantially through to the pitch plane (E).

11. A wind turbine (100, 100', 100"), comprising
a generator, preferably a synchronous generator, a rotor hub (10b), which is coupled to the generator to drive the latter, and one or a plurality of rotor blades (1, 1') fastened to the rotor hub (10b) for driving the rotor hub (10b),
**characterized in that** the rotor blades (1, 1') are formed according to one of the preceding claims.

12. The wind turbine (100, 100', 100") according to claim 11,
wherein a pitch drive comprising a drive pinion which engages a gearing is assigned to each rotor blade (1, 1', 1").

13. The wind turbine (100, 100', 100") according to claim 12,
wherein the gearing is arranged on the outer structure or on a shaft end provided on the outer structure, or directly on the pitch bearing, preferably integrally molded on a bearing ring of the pitch bearing.

14. The wind turbine (100, 100', 100") according to claim 12 or 13,
wherein the gearing is embodied along an angular range of between 60° and 270°, preferably between 90° and 180°.

15. The wind turbine (100, 100', 100") according to one of claims 12 to 14,
wherein the gearing has a plurality of sequentially arranged segments.

## Revendications

1. Pale de rotor d'éolienne (1, 1', 1"), avec
un pied de pale et une pointe de pale (5),
un flasque (7) disposé du côté du pied de pale pour la fixation de la pale de rotor sur un moyeu de rotor d'une éolienne, et
un roulement d'orientation (9b, 9a) pour ajuster l'angle d'incidence (β) de la pale de rotor,
dans laquelle
la pale de rotor présente un support (11) à pas non réglé, sur lequel le flasque (7) est réalisé, dans laquelle le roulement d'orientation (9b, 9a) est fixé sur le support (11) et est tenu à distance du flasque (7) en direction de la pointe de pale (5),
**caractérisée en ce que** le support (11) présente, entre le roulement d'orientation (9a, b) et le flasque (11), une section coudée par rapport à l'axe de pas (P) de telle manière que l'axe de pas (P) est davantage tenu à distance d'un axe de tour (T) de l'éolienne (100'), dans l'état monté sur l'éolienne de la pale de rotor, que le flasque (7).

2. Pale de rotor (1, 1', 1'') selon la revendication 1,
dans laquelle la pale de rotor présente en outre une structure extérieure (13), sur laquelle la surface de pale aérodynamique parcourue par le vent est réalisée, et la structure extérieure est montée sur le support (11) au moyen du roulement d'orientation (9a, 9b) de manière à pouvoir tourner autour d'un axe de pas (P).

3. Pale de rotor (1, 1', 1'') selon la revendication 2,
dans laquelle le roulement d'orientation présente un unique palier (9a), lequel absorbe des contraintes axiales, des contraintes radiales et des couples de basculement entre la structure extérieure (13) et le support (11).

4. Pale de rotor (1, 1', 1'') selon la revendication 1 ou 2,
dans laquelle le roulement d'orientation présente un premier palier (9a), lequel absorbe au moins des contraintes axiales, de préférence des contraintes axiales et des contraintes radiales, de manière particulièrement préférée des contraintes axiales, des contraintes radiales et des couples de basculement, et présente en supplément un deuxième palier (9b) en tant que palier de soutien, lequel absorbe au moins des charges radiales.

5. Pale de rotor (1, 1', 1'') selon la revendication 4,
dans laquelle le premier palier (9a) est davantage tenu à distance du flasque que le deuxième palier (9b).

6. Pale de rotor (1, 1', 1'') selon l'une quelconque des revendications 1 à 5,
dans laquelle la pale de rotor présente un plan de pas (E, E₂), qui est tenu à distance du pied de pale (3) en direction de la pointe de pale (5), et divise la pale de rotor le long du plan de pas en une partie à pas non réglé (13c) et en une partie à pas réglé (13a).

7. Pale de rotor (1, 1') selon l'une quelconque des revendications précédentes,
dans laquelle une zone de chevauchement (13b) est réalisée entre la structure extérieure (13a) et le support (11).

8. Pale de rotor selon la revendication 7,
dans laquelle est disposée sur la structure extérieure (13a) une extrémité d'arbre (14), laquelle est montée dans le support (11) de manière à pouvoir tourner au moyen du roulement d'orientation (9a).

9. Pale de rotor selon la revendication 7,
dans laquelle le support (11) est disposé à l'intérieur de la structure extérieure (13a).

10. Pale de rotor (1') selon l'une quelconque des revendications précédentes, en particulier selon la revendication 9,
avec un habillage de pale (16), qui s'étend entre le pied de pale (3) et la structure extérieure (13a) sensiblement jusqu'au plan de pas (E).

11. Éolienne (100, 100', 100''), avec
un générateur, de préférence un générateur synchrone, un moyeu de rotor (10b), qui est couplé au générateur aux fins de son entraînement, et une ou plusieurs pales de rotor (1, 1') fixée (s) sur le moyeu de rotor (10b) pour entraîner le moyeu de rotor (10b),
**caractérisée en ce que** les pales de rotor (1, 1') sont réalisées selon l'une quelconque des revendications précédentes.

12. Éolienne (100, 100', 100'') selon la revendication 11,
dans laquelle un système de régulation de pas de pale avec un pignon d'entraînement, lequel s'engage dans une denture, est associé à chaque pale de rotor (1, 1', 1'').

13. Éolienne (100, 100', 100'') selon la revendication 12,
dans laquelle la denture est formée sur la structure extérieure ou sur une extrémité d'arbre prévue sur la structure extérieure ou est disposée directement sur le roulement d'orientation, de préférence sur une bague de montage du roulement d'orientation.

14. Éolienne (100, 100', 100'') selon la revendication 12 ou 13,
dans laquelle la denture est réalisée le long d'une plage d'angles entre 60° et 270°, de préférence entre 90° et 180°.

15. Éolienne (100, 100', 100'') selon l'une quelconque des revendications 12 à 14,
dans laquelle la denture présente plusieurs segments alignés les uns les autres.
